Europäisches Patentamt

European Patent Office

Office européen des brevets

(11) Veröffentlichungsnummer: **0 307 668 B1**

# EUROPÄISCHE PATENTSCHRIFT

(45) Veröffentlichungstag der Patentschrift: **29.07.92**

(21) Anmeldenummer: **88113741.8**

(22) Anmeldetag: **24.08.88**

(51) Int. Cl.⁵: **G01P 5/20**

(54) **Verfahren und Vorrichtung zur Messung der Strömungsgeschwindigkeit in Windkanälen.**

(30) Priorität: **04.09.87 DE 3729648**

(43) Veröffentlichungstag der Anmeldung:
**22.03.89 Patentblatt 89/12**

(45) Bekanntmachung des Hinweises auf die
Patenterteilung:
**29.07.92 Patentblatt 92/31**

(84) Benannte Vertragsstaaten:
**DE FR GB**

(56) Entgegenhaltungen:
**GB-A- 2 109 548**
**US-A- 4 664 513**

**APPLIED OPTICS, Band 23, Nr. 11, Juni 1984, Seiten 1687-1688, New York, US; YAO & ADRIAN: "Orthogonal compression and 1-D analysis technique for measurement of 2-D particle displacements in pulsed laser velocimetry"**

**AIAA JOURNAL, Band 15, Nr. 1, Januar 1977, Seiten 110-113, New York, US; SPARKS AND EZEKIEL: "Laser streak velocimetry for two-dimensional flows in gases"**

(73) Patentinhaber: **DEUTSCHE FORSCHUNGSANSTALT FÜR LUFT- UND RAUMFAHRT e.V.**

**W-5300 Bonn(DE)**

(72) Erfinder: **Reichmuth Johannes, DR. Phys.**
**Kastanienweg 3**
**W-3400 Goettingen(DE)**

(74) Vertreter: **Rehberg, Elmar, Dipl.-Ing.**
**Postfach 3162 Am Kirschberge 22**
**W-3400 Göttingen(DE)**

EP 0 307 668 B1

# Beschreibung

Die Erfindung geht aus von einem Verfahren zur Messung der Strömungsgeschwindigkeit in Windkanälen, bei dem ein von in einer Strömung befindlichen Partikeln zurückgelegter Weg als Maß für die Strömungsgeschwindigkeit verwendet wird, indem die Partikel mit einem Lichtstrahl in einem vorgegebenen Zeitabstand zweimal beleuchtet und ein von den Partikeln reflektiertes Licht aufgenommen und in Form eines Bildes wiedergegeben wird, das Bild von einem zweiten kohärentem, in einer ersten Fourier-Ebene fokussierten Lichtstrahl durchleuchtet und somit ein erstes fouriertransformiertes Bild erzeugt wird, welches wiederum aufgenommen wird. Es wird gleichzeitig eine Vorrichtung zur Durchführung des Verfahrens aufgezeigt.

Bei solch einem bekannten Verfahren werden in die zu untersuchende Strömung Partikel eingebracht, die Strömung wird also geimpft. Bei richtiger Wahl der Partikel, insbesondere deren Durchmesser, folgen diese weitgehend der Strömung. Wird also der Weg eines Partikels verfolgt, so ergibt sich daraus sowohl die Geschwindigkeit als auch die Richtung und Orientierung des Strömungsvektors.

Solch ein Verfahren der eingangs beschriebenen Art ist aus dem Artikel "Particle Imaging Velocimetry in a low turbulent Windtunnel and other flow facilities" von J. Kompenhans und J. Reichmuth, AGARD Conference Proceedings No. 399, "Advanced Instrumentation for Aero Engine Components" bekannt. Die Partikel werden in einer Ebene mit einem Lichtstrahl beleuchtet, wobei die Beleuchtung in Form eines Lichtblitzes erfolgt. Nach einem vorgegebenen Zeitabstand erfolgt eine nochmalige Beleuchtung der Partikel. Das von den Partikeln reflektierte Licht wird auf einem Bild festgehalten.

Das Bild wird dabei zweimal von dem reflektierten Licht des ersten und zweiten Lichtblitzes belichtet, so daß auf dem einen Bild jeder Partikel doppelt abgebildet ist. Für die Ermittlung der Geschwindigkeit müssen nun die zusammengehörigen Abbildungen jedes Partikels ermittelt werden. Dies wird dadurch erreicht, daß das in Form eines Dias entwickelte Bild von dem zweiten kohärenten Lichtstrahl durchleuchtet wird. Dieser Lichtstrahl wird in der Fourier-Ebene fokussiert. In der Fourier-Ebene wird somit das erste fouriertransformierte Bild abgebildet. Dieses erste fouriertransformierte Bild weist ein Streifenmuster auf, wobei der Abstand der Streifen umgekehrt proportional der Geschwindigkeit ist.

Der Geschwindigkeitsvektor steht senkrecht zu den Streifen. Die weitere Auswertung wird von einem Rechner vorgenommen, dem das erste fouriertransformierte Bild zugeführt wird. In dem Rechner wird das zweite fouriertransformierte Bild berechnet. Dieses zweite fouriertransformierte Bild weist drei Punkte auf, wobei die Verbindungslinie zwischen dem mittleren Punkt und einem der beiden anderen Punkte den Strömungsvektor ergibt. Nach Durchführung dieser Schritte ist dann der Strömungsvektor in einem Punkt des Strömungsfeldes bekannt. Nachteilig ist, daß dieses Verfahren sehr zeitaufwendig ist: Das von den Partikeln reflektierte Licht wird auf einem Film festgehalten, der, um die Strömungsinformation weiter verarbeiten zu können, erst einmal entwickelt werden muß. Erst nachdem dieses erste fouriertransformierte Bild entwickelt ist, kann dies in den Rechner eingespeist und von diesem dann ausgewertet werden. Auch die Auswertung im Rechner ist sehr zeitintensiv. Übliche Zeiten zur Auswertung eines Meßpunktes liegen im Bereich von etwa einer Minute. Neben den anfallenden Kosten für das Filmmaterial und die Entwicklung, sowie für die Anschaffung und Unterhaltung des Rechners, ist besonders nachteilig, daß eine kontinuierliche Beobachtung der Strömung nicht möglich ist. Hinzu kommt, daß durch unterschiedliche Entwicklung und unterschiedliches Filmmaterial oftmals die Dias unterschiedliche Qualität aufweisen und sich teilweise für die nachfolgende Auswertung nicht eignen. Es muß dann ein neues Dia angefertigt werden, wodurch sich die insgesamt benötigte Zeit vervielfachen kann. Dies jedoch ist bei einigen Untersuchungen, bei denen die Strömung nicht reproduzierbar ist, nicht möglich , so daß das Verfahren für solche Strömungsuntersuchungen nicht anwendbar ist. Selbst für den Fall, indem die Strömung reproduzierbar ist, ist das Verfahren für industrielle Messungen nicht geeignet, da die Auswertung zu langwierig ist und im Regelfall einige Aufnahmen wiederholt werden müssen, so daß die Möglichkeit vorhanden sein muß, nach mehreren Tagen erneut die Strömung zu reproduzieren, der Windkanal muß also mehrere Tage zur Verfügung stehen. Dies ist jedoch aus Kostengründen, ein Windkanaltag kostet oftmals mehrere Tausend DM, nicht möglich.

Der Erfindung liegt die Aufgabe zugrunde, ein Verfahren und eine Vorrichtung zur Messung der Strömungsgeschwindigkeit in Windkanälen der eingangs beschriebenen Art so weiterzubilden, daß eine quasi kontinuierliche Strömungsbeobachtung möglich ist.

Erfindungsgemäß wird dies dadurch erreicht, daß das Bild und das erste fouriertransformierte Bild direkt zur Anzeige gebracht werden, daß das erste fouriertransformierte Bild von einem dritten kohärentem Lichtstrahl durchleuchtet wird und daß somit in einer zweiten Fourier-Ebene ein zweites fouriertransformiertes Bild optisch erzeugt wird, daß das zweite fouriertransformierte Bild aufgenommen und direkt weiterverarbeitet wird. Die Partikel in der Strömung werden also von dem ersten Lichtstrahl in einem vorgegebenen Zeitabstand und in einer bestimmten Ebene beleuchtet. Das von den Partikeln reflektierte Licht wird aufgenommen und direkt wiedergegeben. Die Zeit für die Entwicklung des Dias entfällt. Der zweite Lichtstrahl durchleuchtet das Bild und projiziert in der ersten Fourier-Ebene das erste fouriertransformierte Bild. Dieses wird aufgenommen und direkt wieder abgebildet. Der dritte Lichtstrahl durchleuchtet nun das erste fouriertransformierte Bild und bildet auf der zweiten Fourier-Ebene das zweite fouriertransformierte Bild ab. Das zweite fouriertransformierte Bild wird also auf optischem Wege erzeugt. Dieses zweite fouriertransformierte Bild wird aufgenommen und direkt einem Rechner zugeleitet, der den Strömungsvektor in Bruchteilen einer Sekunde ermittelt. Es ist hier also keinerlei zeitaufwendige Entwicklung erforderlich. Auch entfällt vorteilhaft die zeitintensive Berechnung des zweiten fouriertransformierten Bildes. Die Auswertung wird kontinuierlich durchgeführt, d.h. ohne jegliche Unterbrechung, so daß die Strömung quasi zeitgleich beobachtet werden kann. Es ergibt sich der weitere Vorteil, daß Fehler im System sofort erkannt und behoben werden können. Eine teu-re und zeitaufwendige Wiederholung der Messung nach einem größeren Zeitraum ist nicht erforderlich. Die Notwendigkeit des Eingriffs ergibt sich nicht nur durch Fehler in der Meßvorrichtung, sondern kann ebenfalls aufgrund Veränderung der Strömungsbedingungen gegeben sein. Wird z.B. in einem Gebiet mit geringer Turbulenz gemessen, so ist eine andere Einstellung erforderlich als im Gebiet hoher Turbulenz. Die Einstellung kann also den jeweils vorliegenden Bedingungen angepaßt werden. Es ergibt sich somit auch eine wesentlich verbesserte Qualität des Bildes als auch der fouriertransformierten Bilder. Dies hat den Vorteil, daß einerseits der Meßfehler kleiner ist und andererseits auch Messungen bei Strömungsverhältnissen durchgeführt werden können, bei denen das im Stand der Technik bekannte Verfahren nicht mehr anwendbar ist.

Die Partikel können mit einem Laserstrahl beleuchtet werden. Die Verwendung eines Laserstrahls bietet den Vorteil, daß der Lichtstrahl hohe Energie besitzt, und somit das von den Partikeln reflektierte Licht auch bei ungünstigen Verhältnissen für die Aufnahme ausreichend ist. Der Laserstrahl läßt sich auch in besonders einfacher Weise zur Beleuchtung nur einer einzigen Ebene benutzen.

Das Bild der ersten Aufnahmeeinheit kann zwischengespeichert werden. Es ergibt sich somit die Möglichkeit, daß sich später noch weitere, eventuell genauere Auswertungen anschließen können. Es kann somit immer auf das ursprüngliche Bild zurückgegriffen werden, welches noch keiner weiteren Verarbeitung unterworfen wurde. Dies hat auch den Vorteil, daß im Fall eines Fehlers in den nachgeschalteten Geräten, also beispielsweise in der zweiten oder dritten Aufnahmeeinheit, eine spätere Auswertung möglich ist, ohne daß der Versuch nochmals durchgeführt werden muß.

Die Vorrichtung zur Durchführung des neuen Verfahrens mit einer ersten Lichtquelle zur Beleuchtung der Partikel mit dem Lichtstrahl, einer ersten Aufnahmeeinheit für das von den Partikeln reflektierte Licht, einer ersten Ausgabeeinheit für das dem reflektierten Licht entsprechende Bild, einer zweiten Lichtquelle für den zweiten Lichtstrahl, einer ersten Optik, durch die der zweite Lichtstrahl in der ersten Fourierebene fokussiert wird, einer zweiten Aufnahmeeinheit für das erste fouriertransformierte Bild, und mit einem Rechner für die Bildauswertung ist erfindungsgemäß dadurch gekennzeichnet, daß eine zweite Ausgabeeinheit für das erste fouriertransformierte Bild, eine zweite Optik zur Fokussierung des dritten kohärenten Lichtstrahls in der zweiten Fourier-Ebene und eine dritte Aufnahmeeinheit für das zweite fouriertransformierte Bild vorgesehen sind, wobei die dritte Aufnahmeeinheit mit dem Rechner zu der direkten Weiterverarbeitung des zweiten fouriertransformierten Bildes verbunden ist. Dabei weisen die erste und zweite Ausgabeeinheit jeweils einen LCD-Schirm auf, wobei dem jeweiligen LCD-Schirm eine Digitalisierungseinheit und ein LCD-Controller vorgeschaltet sein können. Die Verwendung eines LCD-Schirms als Ausgabeeinheit erfüllt in idealer Weise die hier vorliegenden Bedingungen. Der Schirm ist durchleuchtbar, so daß jeweils auf optischem Wege das fouriertransformierte Bild des auf dem LCD-Schirm abgebildeten Bildes erzeugt werden kann. Auch bietet der LCD-Schirm eine ausreichende Auflösung und Kontrast. Die Digitalisierungseinheit und der LCD-Controller dienen der Aufarbeitung des Signals der Aufnahmeeinheit für den LCD-Schirm. Es versteht sich, das als Ausgabeeinheit jeder räumlich ansteuerbare Lichtmodulator verwendet werden kann.

Vorteilhaft können Umlenkspiegel zur Teilung des Lichtstrahls der zweiten Lichtquelle in dem zweiten und dritten kohärenten Lixhtstrahl vorgesehen sein. Dabei kann als erste und zweite Lichtquelle je ein Laser vorgesehen sein. Damit ist sichergestellt, daß der Lichtstrahl kohärent ist, und so in der jeweiligen Fourierebene das jeweilige Interferenzmuster erzeugt werden kann.

Die erste, zweite und dritte Aufnahmeeinheit kann eine Video-Kamera aufweisen. Der ersten Video-Kamera kann dabei ein Video-Rekorder nachgeschaltet sein. Die Verwendung der Video-Kamera hat sich dabei als besonders preisgünstig und störunanfällig bewiesen. Die Speicherung der mit der Video-Kamera gemachten Bilder erfolgt zweckmäßig auf einem der Video-Kamera nachgeschalteten Video-Rekorder.

Die Erfindung wird anhand eines bevorzugten Ausführungsbeispiels weiter beschrieben.

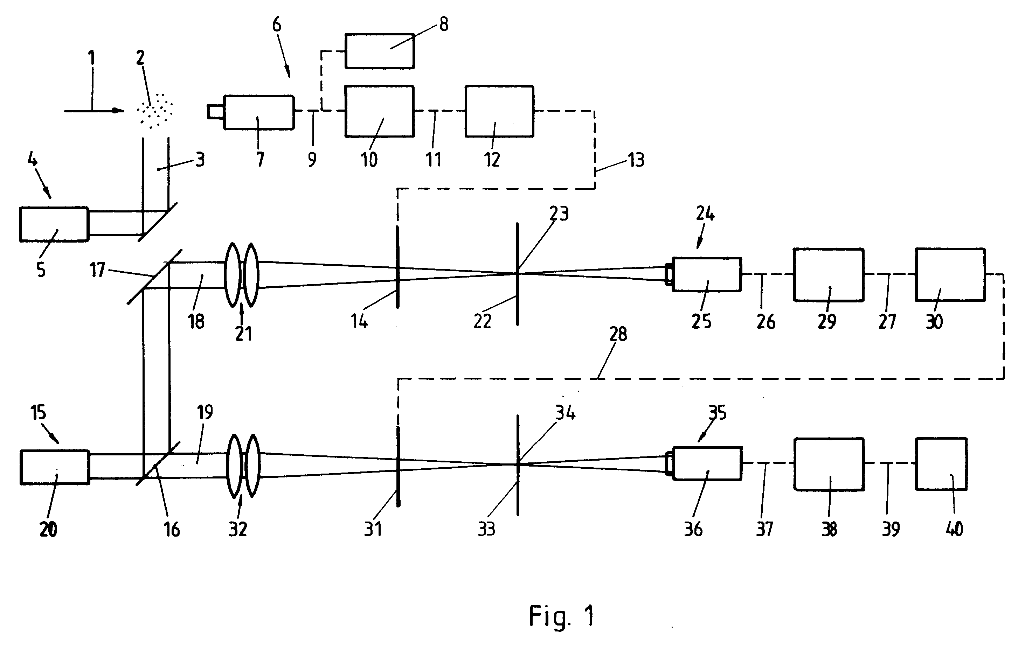

Fig. 1      zeigt eine schematische Darstellung des Verfahrens und der Vorrichtung.

In einer Strömung 1 werden Partikel 2 mitbewegt. Diese Partikel 2 werden von der Strömung 1 nahezu schlupffrei befördert. Eine Ebene senkrecht zur Zeichenebene wird mit einem Lichtstrahl 3 ausgeleuchtet. Der Lichtstrahl 3 wird von einer ersten Lichtquelle 4 erzeugt. Die erste Lichtquelle 4 ist als Laser 5 ausgebildet. Die Ausleuchtung erfolgt in Form eines Blitzes, und zwar zweimal in einem vorgegebenen Zeitraum. Das von den Partikeln 2 reflektierte Licht wird von einer ersten Aufnahmeeinheit 6, die eine Video-Kamera 7 und einen Video-Rekorder 8 aufweist, registriert. Die Video-Kamera 7 steht über eine elektrische Verbindung 9 mit einer ersten Digitalisierungseinheit 10 und diese über eine elektrische Verbindung 11 mit einem LCD-Controller 12 in Verbindung. Der LCD-Controller 12 gibt über eine elektrische Verbindung 13 seine Signale an einen ersten LCD-Schirm 14 weiter. Die erste Digitalisierungseinheit 10, der LCD-Controller 12 und der LCD-Schirm 14 stellen die erste Ausgabeeinheit 10, 12, 14 dar. In den Lichtstrahl einer zweiten Lichtquelle 15 sind Umlenkspiegel 16 und 17 angeordnet, so daß der Lichtstrahl der zweiten Lichtquelle 15 in einen zweiten Lichtstrahl 18 und einem dritten Lichtstrahl 19 aufgeteilt wird. Als zweite Lichtquelle 15 ist ein zweiter Laser 20 vorgesehen, so daß der zweite Lichtstrahl 18 und der dritte Lichtstrahl 19 kohärent sind. In dem zweiten Lichtstrahl 18 ist eine erste Optik 21 angeordnet. Die erste Optik 21 fokussiert den zweiten Lichtstrahl 18 in einer ersten Fourier-Ebene 22. Vor der ersten Fourier-Ebene 22, also zwischen der ersten Optik 21 und der ersten Fourier-Ebene 22, ist der LCD-Schirm 14 angeordnet. Der zweite Lichtstrahl 18 durchleuchtet den LCD-Schirm 14, so daß in der ersten Fourier-Ebene 22 ein erstes fouriertransformiertes Bild 23 abgebildet wird. Das erste fouriertransformierte Bild 23 wird von einer zweiten Aufnahmeeinheit 24, die ebenfalls als Video-Kamera 25 ausgebildet ist, aufgenommen. Über elektrische Verbindungen 26, 27 und 28 wird das Ausgangssignal der Video-Kamera 25 einer zweiten Digitalisierungseinheit 29, einem zweiten LCD-Controller 30 und einem zweiten LCD-Schirm 31 zugeführt. Die zweite Digitalisierungseinheit 29, der zweite LCD-Controller 30 und der zweite LCD-Schirm 31 bilden dabei die zweite Ausgabeeinheit 29, 30, 31. Der dritte Lichtstrahl 19, der von einer zweiten Optik 32 in einer zweiten Fourier-Ebene 33 fokussiert wird, durchleuchtet den zweiten LCD-Schirm 31, so daß sich in der zweiten Fourier-Ebene 33 ein zweites fouriertransformiertes Bild 34 ergibt. Dieses zweite fouriertransformierte Bild 34 wird von einer dritten Aufnahmeeinheit 35, die eine Video-Kamera 36 enthält, aufgenommen. Das Ausgangssignal der Video-Kamera 36 wird über eine elektrische Verbindung 37 einer dritten Digitalisierungseinheit 38 und über eine elektrische Verbindung 39 einem Rechner 40 zur Verfügung gestellt.

Im folgenden wird die Funktionsweise des Verfahrens erläutert. In die Strömung 1 werden die Partikel 2 eingebracht. Die Partikel 2 sind derart dimensioniert, daß sie von der Strömung 1 quasi schlupffrei mitbewegt werden. Der von jedem Partikel 2 zurückgelegte Weg ergibt dann den Strömungsvektor der Strömung 1. Um diesen Weg zu erhalten bzw. berechnen zu können, werden die Partikel 2 mit dem Lichtstrahl 3 in Form eines Blitzes zweimal beleuchtet. Die Partikel 2 reflektieren teilweise den Lichtstrahl 3. Das reflektierte Licht wird von der Video-Kamera 7 registriert. Es ergibt sich somit eine Aufnahme, auf der jeder der Partikel 2 zweimal abgebildet ist. Die Strömungsgeschwindigkeit der Strömung 1 ergibt sich aus dem von den einzelnen Partikeln 2 zurückgelegten Weg zu der Zeitdifferenz zwischen den zwei Blitzen des Lichtstrahls 3. Die Richtung und Orientierung der Strömung 1 erhält man aus der Verbindungslinie jedes der zweifach abgelichteten Partikeln 2. Diese Auswertung erfolgt zweckmäßigerweise auf optischem Wege. Dafür wird das Ausgangssignal der Video-Kamera 7 der ersten Digitalisierungseinheit 10 zugeführt. Das in der Digitalisierungseinheit 10 digitalisierte Signal wird von dem LCD-Controller 12 aufgearbeitet, so daß es auf dem LCD-Schirm 14 zur Anzeige gebracht wird. Der LCD-Schirm 14 wird von dem zweiten kohärenten Lichtstrahl 18, der in der ersten Fourier-Ebene 22 mittels der ersten Optik 21 fokussiert ist, durchleuchtet, so daß das erste fouriertransformierte Bild 23 in der ersten Fourier-Ebene 22 gebildet ist. Das erste fouriertransformierte Bild 23 stellt sich als ein Streifenmuster dar, wobei die Abstände der Streifen umgekehrt proportional der Geschwindigkeit sind. Durch eine zweite optische Fouriertransformation, also durch die Aufnahme des ersten fouriertransformierten Bildes 23 mit der zweiten Video-Kamera 25 und Weiterverarbeitung des Signals der zweiten Video-Kamera 25 mittels der zweiten Digitalisierungseinheit 29 und dem zweiten LCD-Controller 30 sowie Darstellung des ersten fouriertransformierten Bildes 23 auf dem zweiten LCD-Schirm 31, der von dem dritten kohärenten Lichtstrahl 19 durchleuchtet wird und in der zweiten Fourier-Ebene 33 fokussiert ist, ergibt sich eine weitere Vereinfachung der Auswertung. Das in der zweiten Fourier-Ebene 33 abgebildete zweite fouriertransformierte Bild 34 weist nun drei Punkte auf, wobei jeweils zwei Punkte um den mittleren Punkt symmetrisch angeordnet sind. Der Abstand zwischen dem mittleren Punkt und einem der beiden äußeren Punkte ist proportional der Geschwindigkeit, die Verbindungslinie ergibt die Richtung und Orientierung des Strömungsvektors der Strömung 1. Das zweite fouriertransformierte Bild 34 wird über die Video-Kamera 36 und der dritten Digitalisierungseinheit 38 dem Rechner 40 zur Verfügung gestellt. Der Rechner 40 berechnet nun aus dem Abstand der Punkte des zweiten fouriertransformierten Bildes 34 sowie deren Lage den Strömungsvektor der Strömung 1. Die Berechnung ist einfach und erfolgt in Bruchteilen einer Sekunde.

**Bezugszeichenliste:**

| | | |
|---|---|---|
| 1 | = | Strömung |
| 2 | = | Partikel |
| 3 | = | Lichtstrahl |
| 4 | = | erste Lichtquelle |
| 5 | = | Laser |
| 6 | = | erste Aufnahmeeinheit |
| 7 | = | Video-Kamera |
| 8 | = | Video-Rekorder |
| 9 | = | elektrische Verbindung |
| 10 | = | erste Digitalisierungseinheit |
| 11 | = | elektrische Verbindung |
| 12 | = | LCD-Controller |
| 13 | = | elektrische Verbindung |
| 14 | = | LCD-Schirm |
| 15 | = | zweite Lichtquelle |
| 16 | = | Umlenkspiegel |
| 17 | = | Umlenkspiegel |
| 18 | = | zweiter Lichtstrahl |
| 19 | = | dritter Lichtstrahl |
| 20 | = | Laser |
| 21 | = | erste Optik |
| 22 | = | erste Fourier-Ebene |
| 23 | = | erstes fouriertransformiertes Bild |
| 24 | = | zweite Aufnahmeeinheit |
| 25 | = | Video-Kamera |
| 26 | = | elektrische Verbindung |
| 27 | = | elektrische Verbindung |
| 28 | = | elektrische Verbindung |
| 29 | = | zweite Digitalisierungseinheit |
| 30 | = | zweiter LCD-Controller |
| 31 | = | zweiter LCD-Schirm |
| 32 | = | zweite Optik |
| 33 | = | zweite Fourier-Ebene |
| 34 | = | zweites fouriertransformiertes Bild |
| 35 | = | dritte Aufnahmeeinheit |
| 36 | = | Video-Kamera |
| 37 | = | elektrische Verbindung |
| 38 | = | dritte Digitalisierungseinheit |
| 39 | = | elektrische Verbindung |
| 40 | = | Rechner |

**Patentansprüche**

1. Verfahren zur Messung der Strömungsgeschwindigkeit in Windkanälen, bei dem ein von in einer Strömung (1) befindlichen Partikeln (2) zurückgelegter Weg als Maß für die Strömungsgeschwindigkeit verwendet wird, indem die Partikel (2) mit einem Lichtstrahl (3) in einem vorgegebenen Zeitabstand zweimal beleuchtet und ein von den Partikeln (2) reflektiertes Licht aufgenommen und in Form eines Bildes wiedergegeben wird, das Bild von einem zweiten kohärenten, in einer ersten Fourier-Ebene (22) fokussierten Lichtstrahl (18) durchleutet und somit ein erstes fouriertransformiertes Bild (23) erzeugt wird, welches wiederum aufgenommen wird, dadurch gekennzeichnet, daß das Bild und das erste fouriertransformierte Bild (23) direkt zur Anzeige gebracht werden, daß das erste fouriertransformierte Bild (23) von einem dritten kohärentem Lichtstrahl (19) durchleuchtet wird und daß somit in einer zweiten Fourier-Ebene (33) ein zweites fouriertransformiertes Bild (34) optisch erzeugt wird, daß das zweite fouriertransformierte Bild (34) aufgenommen und direkt weiterverarbeitet wird.

2. Verfahren nach Anspruch 1, dadurch gekennzeichnet, daß die Partikel (2) mit einem Laserstrahl beleuchtet werden.

3. Verfahren nach Anspruch 1, dadurch gekennzeichnet, daß das Bild zwischengespeichert wird.

4. Vorrichtung zur Durchführung des Verfahrens nach Anspruch 1, mit einer ersten Lichtquelle (4) zur Beleuchtung der Partikel (2) mit dem Lichtstrahl (3), einer ersten Aufnahmeeinheit (6) für das von den Partikeln reflektierte Licht, einer ersten Ausgabeeinheit für das dem reflektierten Licht entsprechende Bild, einer zweiten Lichtquelle (15) für den zweiten Lichtstrahl (18), einer ersten Optik (21), durch die der zweite Lichtstrahl (18) in der ersten Fourierebene (22) fokussiert wird, einer zweiten Aufnahmeeinheit (24) für das erste fouriertransformierte Bild (23) und mit einem Rechner (40) für die Bildauswertung, dadurch gekennzeichnet, daß eine zweite Ausgabeeinheit (29, 30, 31) für das erste fouriertransformierte Bild (23), eine zweite Optik (32) zur Fokussierung des dritten kohärenten Lichtstrahls (19) in der zweiten Fourier-Ebene (33) und eine dritte Aufnahmeeinheit (35) für das zweite fouriertransformierte Bild (34) vorgesehen sind und daß die dritte Aufnahmeeinheit (35) mit dem Rechner (40) zu der direkten Weiterverarbeitung des zweiten fouriertransformierten Bildes (34) verbunden ist.

**5.** Vorrichtung nach Anspruch 4, dadurch gekennzeichnet, daß die erste und zweite Ausgabeeinheit (10, 12, 14; 29, 30, 31) jeweils einen LCD-Schirm (14, 31) aufweisen und daß dem jeweiligen LCD-Schirm (14, 31) eine Digitalisierungseinheit (10, 29) und ein LCD-Controller (12, 30) vorgeschaltet sind.

**6.** Vorrichtung nach Anspruch 4, dadurch gekennzeichnet, daß Umlenkspiegel (16, 17) zur Teilung des Lichtstrahls der zweiten Lichtquelle (15) in dem zweiten und dritten kohärenten Lichtstrahl (18, 19) vorgesehen sind.

**7.** Vorrichtung nach Anspruch 4, dadurch gekennzeichnet, daß als erste und zweite Lichtquelle (4, 15) jeweils ein Laser (5, 20) vorgesehen ist.

**8.** Vorrichtung nach Anspruch 4, dadurch gekennzeichnet, daß die. erste, zweite und dritte Aufnahmeeinheit (6, 24, 35) jeweils eine Video-Kamera (7, 25, 36) aufweist.

**9.** Vorrichtung nach Anspruch 4 und 8, dadurch gekennzeichnet, daß der ersten Video-Kamera (7) ein Video-Rekorder (8) nachgeschaltet ist.

## Claims

**1.** Process for measuring the velocity of flow in wind tunnels, in which process a path traversed by particles (2) situated in a stream (1) is employed as a measure of the velocity of flow, in that the particles (2) are twice illuminated with a light beam (3) at a predetermined interval of time and a light reflected by the particles (2) is recorded and is reproduced in the form of an image, the image is transilluminated by a second coherent light beam (18) focused in a first Fourier plane (22) and thus a first Fourier-transformed image (23) is generated, which in turn is recorded, characterised in that the image and the first Fourier-transformed image (23) are directly displayed, in that the first Fourier-transformed image (23) is transilluminated by a third coherent light beam (19), and in that a second Fourier-transformed image (34) is thus optically generated in a second Fourier plane (33), and in that the second Fourier-transformed image (34) is recorded and directly further processed.

**2.** Process according to Claim 1, characterised in that the particles (2) are illuminated with a laser beam.

**3.** Process according to Claim 1, characterised in that the image is placed in intermediate storage.

**4.** Device for carrying out the process according to Claim 1, having a first light source (4) to illuminate the particles (2) with the light beam (3), a first recording unit (6) for the light reflected by the particles, a first output unit for the image corresponding to the reflected lights a second light source (15) for the second light beam (18), a first optical system (21), by which the second light beam (18) is focused in the first Fourier plane (22), a second recording unit (24) for the first Fourier-transformed image (23), and having a computer (40) for the image evaluation, characterised in that a second output unit (29, 30, 31), for the first Fourier-transformed image (23), a second optical system (32) to focus the third coherent light beam (19) in the second Fourier plane (33) and a third recording unit (35) for the second Fourier-transformed image (34) are provided, and in that the third recording unit (35) is connected to the computer (40) for the direct further processing of the second Fourier-transformed image (34).

**5.** Device according to Claim 4, characterised in that the first and second output unit (10, 12, 14; 29, 30, 31) exhibit a respective LCD screen (14, 31), and in that a digitalizing unit (10, 29) and an LCD controller (12, 30) are connected upstream of the respective LCD screen (14, 31).

**6.** Device according to Claim 4, characterised in that deflecting mirrors (16, 17) are provided to divide the light beam of the second light source (15) in the second and third coherent light beam (18, 19).

**7.** Device according to Claim 4, characterised in that a respective laser (5, 20) is provided as the first and second light source (4, 15).

**8.** Device according to Claim 4, characterised in that the first, second and third recording unit (6, 24, 35) exhibit a respective video camera (7, 25, 36).

**9.** Device according to Claims 4 and 8, characterised in that a video recorder (8) is connected downstream of the first video camera (7).

## Revendications

1. Procédé de mesure de la vitesse d'écoulement dans des souffleries aérodynamiques, dans lequel la course parcourue par des particules (2) se trouvant dans un écoulement (1) est utilisée comme mesure de la vitesse d'écoulement, les particules (2) étant éclairées par un rayon lumineux (3) deux fois dans un laps de temps prédéfini, et une lumière réfléchie par les particules (2) étant enregistrée et reproduite sous la forme d'une image, l'image étant éclairée par transparence par un deuxième rayon lumineux cohérent (18) focalisé dans un premier plan de Fourier (22) et une première image à transformation de Fourier (23) étant ainsi obtenue et à nouveau enregistrée, caractérisé en ce que l'image et la première image à transformation de Fourier (23) sont directement visualisées, en ce que la première image à transformation de Fourier (23) est éclairée par transparence par un troisième rayon lumineux cohérent (19) et une seconde image à transformation de Fourier (34) est ainsi produite optiquement dans un second plan de Fourier (33), en ce que la seconde image à transformation de Fourier (34) est enregistrée et retraitée directement.

2. Procédé conforme à la revendication 1, caractérisé en ce que les particules (2) sont éclairées avec un rayon laser.

3. Procédé conforme à la revendication 1, caractérisé en ce que l'image fait l'objet d'une mémorisation intermédiaire.

4. Dispositif de réalisation du procédé conforme à la revendication 1, avec une première source lumineuse (4) pour éclairer les particules (2) avec le rayon lumineux (3), une première unité d'enregistrement (6) de la lumière réfléchie par les particules, une première unité de sortie de l'image correspondant à la lumière réfléchie, une seconde source lumineuse (15) pour le deuxième rayon lumineux, une première optique (21) par l'intermédiaire de laquelle le deuxième rayon lumineux (18) est focalisé dans le premier plan de Fourier (22), une deuxième unité d'enregistrement (24) de la première image à transformation de Fourier (23), et avec un ordinateur (40) pour l'analyse des images, caractérisé en ce qu'une seconde unité de sortie (29, 30, 31) de la première image à transformation de Fourier (23), une seconde optique (32) pour focaliser le troisième rayon lumineux cohérent (19) dans le second plan de Fourier (33) et une troisième unité d'enregistrement (35) de la seconde image à transformation de Fourier (34) sont prévus, et en ce que la troisième unité d'enregistrement (35) est reliée à l'ordinateur (40) pour retraiter directement la seconde image à transformation de Fourier (34).

5. Dispositif conforme à la revendication 4, caractérisé en ce que les première et seconde unités de sortie (10, 12, 14 ; 29, 30, 31) comportent chacune un écran à affichage à cristaux liquides (14, 31), et en ce qu'une unité de numérisation (10, 29) et un contrôleur à affichage à cristaux liquides (12, 30) sont connectés en amont de chaque écran à affichage à cristaux liquides (14, 31).

6. Dispositif conforme à la revendication 4, caractérisé en ce que des miroirs déflecteurs (16, 17) sont prévus pour diviser le rayon lumineux de la seconde source lumineuse (15) en deuxième et troisième rayons lumineux cohérents (18, 19).

7. Dispositif conforme à la revendication 4, caractérisé en ce qu'un laser (5, 20) est prévu respectivement comme première et deuxième sources lumineuses (4, 15).

8. Dispositif conforme à la revendication 4, caractérisé en ce que les première, deuxième et troisième unités d'enregistrement (6, 24, 35) comportent chacune une caméra vidéo (7, 25, 36).

9. Dispositif conforme à la revendication 4 et 8, caractérisé en ce qu'un enregistreur vidéo (8) est connecté en aval de la première caméra vidéo (7).

Fig. 1